# FASCICULE DE BREVET EUROPEEN

(11) **EP 1 771 688 B1**
(45) Date de publication et mention de la délivrance du brevet: **26.03.2008**
(21) Numéro de dépôt: 05749510.3
(22) Date de dépôt: 08.06.2005
(51) Int. Cl.: F25B 15/06, B60H 1/32

(54) **SYSTEME DE REFROIDISSEMENT À ABSORPTION D'UN VEHICULE À MOTEUR**
ABSORPTIONSKÜHLSYSTEM FÜR EIN KRAFTFAHRZEUG
ABSORPTION COOLING SYSTEM FOR A MOTOR VEHICLE

(30) Priorité: 30.07.2004 EP 04405485
(43) Date de publication de la demande: 11.04.2007
(73) Titulaire: Ecoclim SA, 1950 Sion (CH)
(72) Inventeur: BRUZZO, Vitale, 36040 Vicenza (IT)
(74) Mandataire: Cronin, Brian Harold John
(86) Numéro de dépôt international: PCT/IB2005/001809
(87) Numéro de publication internationale: WO 2006/013407

(56) Documents cités:
- FR-A- 2 805 493
- US-A- 4 445 340
- US-A- 5 934 090
- US-B1- 6 260 364

## Description

La présente invention est relative à un système de refroidissement à absorption destiné à un véhicule à moteur utilisant l'eau comme réfrigérant et un sel comme absorbant, comportant des moyens de temporisation de manière à ce que, dès l'arrêt du moteur, un dispositif efficace empêche la cristallisation des dépôts résiduels de l'absorbant dans les conduits.

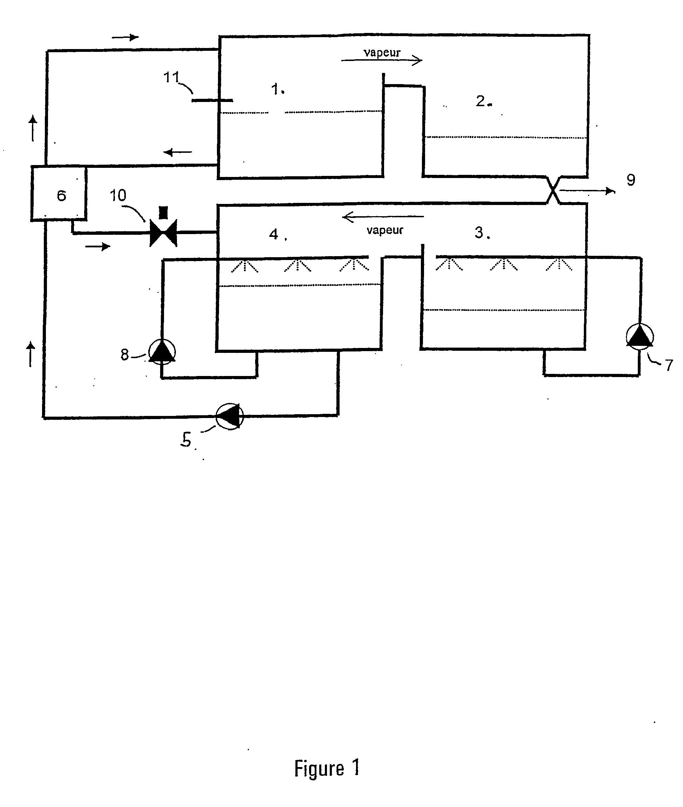

Les systèmes de refroidissement par absorption sont largement exposés dans l'état de la technique. Le document US 4445340, qui est considéré comme l'état de l'art antérieur le plus proche, divulgue un tel système. La figure 1 illustre le principe de ces systèmes. Ils comprennent principalement un bouilleur (1), un condenseur (2), un évaporateur (3), un absorbeur (4), une pompe (5) de la solution réfrigérante, un échangeur de chaleur (6), une pompe (7) de l'évaporateur, une pompe (8) de l'absorbeur, une vanne d'expansion (9), une électrovanne (10) ainsi qu'un contrôleur du niveau (11) du bouilleur. Ces systèmes sont rigoureusement sous vide. Le fonctionnement de la machine est basé sur le point triple de l'eau (liquide, solide, vapeur à 0 bar et 0°C).

Pour fonctionner, le bouilleur (1) est rempli d'un mélange d'au moins deux substances miscibles (le mélange initial est d'environ 50% d'eau et 50% de bromure de lithium) dénommé mélange binaire. Ce mélange est chauffé à environ 80°C dans le bouilleur (1). Sous l'effet de la chaleur, et à une telle pression, l'eau bout et s'évapore, se dirigeant vers le condenseur (2). Celui-ci, refroidi par une intervention externe, condense la vapeur qui devient liquide. La chauffe dans le bouilleur (1) a porté dans celui-ci et dans le condenseur (2), la pression à environ 75 mbar. Le liquide produit passe à travers une vanne d'expansion (9) et arrive dans l'évaporateur (3) où la pression est à environ 7 mbar. A cette pression le liquide s'évapore et produit du froid, environ 6 °C.

Dans le bouilleur (1) il reste une solution plus pauvre en eau et plus chargée en sel appelée communément solution pauvre. Grâce à la différence de pression entre le bouilleur (1) (75 mbar) et l'absorbeur (4), ladite solution s'écoule dans ledit absorbeur (4) par l'échangeur (6). Dans l'absorbeur (4), la solution pauvre absorbe la vapeur venant de l'évaporateur (3), la solution ainsi recomposée est envoyée vers le bouilleur (1) grâce la pompe (5) et le cycle recommence.

L'échangeur de chaleur (6) placé entre le bouilleur (1) et l'absorbeur (4) permet d'une part le refroidissement de la solution pauvre de 80°C à 60 °C et d'autre part le préréchauffement de la solution riche de 50 °C à 70°C environ. Un contrôleur de niveau (11), placé dans le bouilleur (1), pilote l'électrovanne (10) et la pompe (5) de la solution. L'électrovanne (10) se ferme à l'arrêt du moteur et évite ainsi la vidange complète du bouilleur (1) dans l'absorbeur (4). L'évaporateur (3) et l'absorbeur (4) sont dotés tous deux d'une pompe (7,8) qui recycle le réfrigérant dans l'évaporateur (3) et l'absorbeur (4) optimisant ainsi le rendement de chacun des éléments. L'absorbeur (4) est généralement refroidi par une source externe.

Ce genre de systèmes rencontre un problème majeur qui est la cristallisation. Ce phénomène se produit quand la solution pauvre dépasse un seuil (environ 63%) de concentration en sel ou lorsque ladite solution est portée à une température inférieure à une température de consigne (environ 35 °C).

Pour pallier aux problèmes qui se présentent quand la solution pauvre dépasse ce seuil de concentration en sel ou lorsque ladite solution est portée à une température inférieure à celle de consigne, il existe divers systèmes qui sont décris dans l'état de la technique.

Par exemple, le brevet US3626711 illustre un système comportant une valve fermée en temps normal dont l'ouverture est contrôlée par un capteur qui transmet un signal lorsque la température de la solution concentrée a atteint une valeur de consigne. A cet instant, l'ouverture d'une valve libère le réfrigérant dans les conduits susceptibles de contenir des dépôts d'absorbant afin de diluer ces derniers et d'éviter ainsi le phénomène de cristallisation.

Toutefois, ce système ne fonctionne pas en cas d'arrêts fréquents accidentels ou programmés du système de refroidissement.

Pourtant dans le cas où un tel système de refroidissement est installé à bord d'un véhicule automobile, pourvu d'un dispositif décrit dans WO 01/18463 et WO 01/18366, un moyen fiable et efficace pour éviter la cristallisation est indispensable pour pallier les problèmes d'arrêts fréquents d'un véhicule.

US5934090 décrit un dispositif qui, en cas d'arrêt non programmé du système, dilue les dépôts résiduels se trouvant dans les conduits provoqués par la solution absorbante (bromure de lithium) en envoyant dans lesdits conduits, une certaine quantité de réfrigérant. Cependant, ce système présente l'inconvénient d'être relativement complexe puisque la quantité de réfrigérant déversé dans les conduits y est calculée en fonction de la concentration du liquide absorbant. En effet, la cristallisation est directement liée à la température extérieure et à la concentration du liquide absorbant. La baisse en concentration du bromure de lithium contenu dans le liquide absorbant par l'apport de réfrigérant empêche la cristallisation. En outre, un tel système présente un coût relativement élevé.

Le but de la présente invention est de proposer un système de refroidissement à absorption d'un véhicule à moteur utilisant l'eau comme réfrigérant et un absorbant, de manière à ce que, dès l'arrêt du moteur, un dispositif efficace empêche la cristallisation des dépôts résiduels de l'absorbant dans les conduits tout en conservant un mécanisme simple et peu coûteux qui évite de calculer la quantité de liquide réfrigérant en fonction de la concentration du liquide absorbant.

Conformément à l'invention, ce but est atteint grâce à l'adjonction d'un circuit destiné à assurer l'écoulement du réfrigérant, dès l'arrêt du moteur, de l'évaporateur, à l'absorbeur en passant par une première électrovanne. Cela est accomplit d'une part par le maintien en marche de la deuxième pompe de l'évaporateur pour un temps prédéfini, et d'autre part par le maintien de la première électrovanne en position ouverte après l'arrêt du moteur pour un autre temps prédéfini avant sa fermeture, afin de diluer les zones contenant des dépôts résiduels de l'absorbant pour empêcher la cristallisation de ces dits dépôts résiduels.

L'invention est décrite et comparée à l'état de la technique ci-après à l'aide d'un exemple en se référant aux dessins joints, dans lesquels :
- La figure 1 illustre un système de refroidissement conventionnel faisant partie de l'état de la technique et qui n'a que pour but de faciliter la compréhension de l'invention.
- La figure 2 illustre un système de refroidissement avec l'adjonction, selon l'invention, d'un dispositif de décristallisation en cas d'arrêt subit du système.
- La figure 3 illustre un schéma électrique du système de refroidissement, selon l'invention.

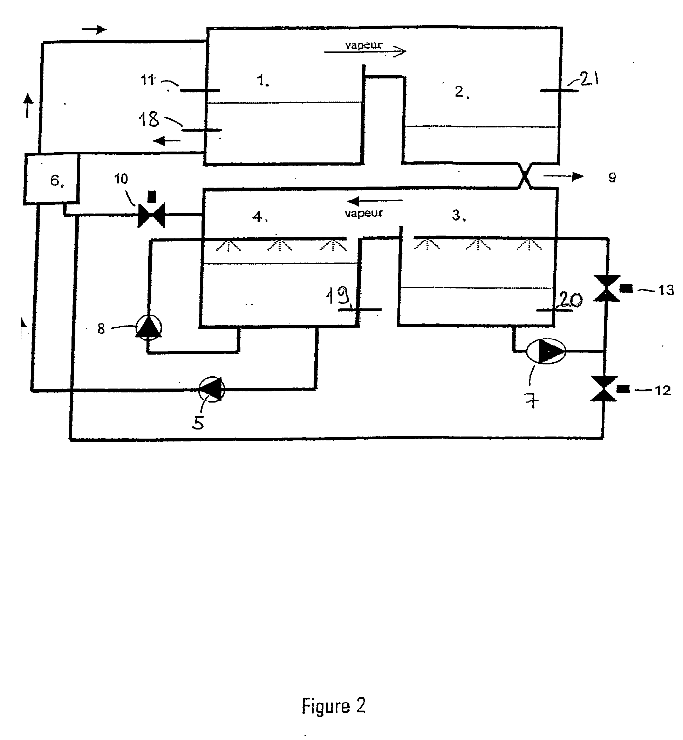

L'invention propose une extension du dispositif décrit plus haut par l'adjonction de deux électrovannes (12, 13) montées en parallèles à la sortie de l'évaporateur (3) comme illustré par la figure 2. L'électrovanne (13) est ouverte et l'électrovanne (12) est fermée quand le moteur est en marche de façon à créer un circuit fermé dans l'évaporateur pour faire circuler le réfrigérant, par l'intermédiaire de la pompe (7) de l'évaporateur, indéfiniment. Dès l'arrêt du moteur les deux électrovannes (12, 13) changent d'état simultanément et le fluide réfrigérant est redirigé par un conduit vers l'électrovanne (10) qui est positionnée en série entre le bouilleur (1) et l'absorbeur (4), grâce au maintien en marche de la pompe (7) de l'évaporateur (3) qui est alimentée par une batterie de voiture. Ladite électrovanne (10) qui en temps normal se ferme à l'arrêt du moteur pour éviter la vidange dudit bouilleur (1) dans ledit absorbeur (4), reste ouverte dès l'arrêt du moteur pendant une durée suffisante (par exemple cinq secondes) pour permettre au réfrigérant (eau) de nettoyer l'électrovanne (10) et le conduit allant vers l'absorbeur (4) qui sont des zones présentant des risques élevés de cristallisation.

Dès que l'électrovanne (10) se ferme, la pompe (7) de l'évaporateur (3) est maintenue en marche pendant une durée suffisante, par exemple 15 secondes à compter de l'arrêt du moteur, pour permettre au réfrigérant (eau) de circuler dans la partie allant de l'électrovanne (10) au bouilleur (1) en passant par l'échangeur (6) durant un temps suffisant, par exemple 10 secondes, pour libérer cette zone des dépôts résiduels de l'absorbant évitant ainsi la cristallisation.

L'ouverture de ces deux électrovannes (12, 13) est pilotée par un relais actionné à l'arrêt du moteur.

Ce système, selon l'invention, est pourvu de quatre contrôleurs de niveau (18, 19, 20, 21) placés respectivement dans le bouilleur (1), le condenseur (2), l'évaporateur (3) et l'absorbeur (4). En cas de détection de niveau bas dans l'un des réservoirs précités, le processus de décristallisation s'effectue.

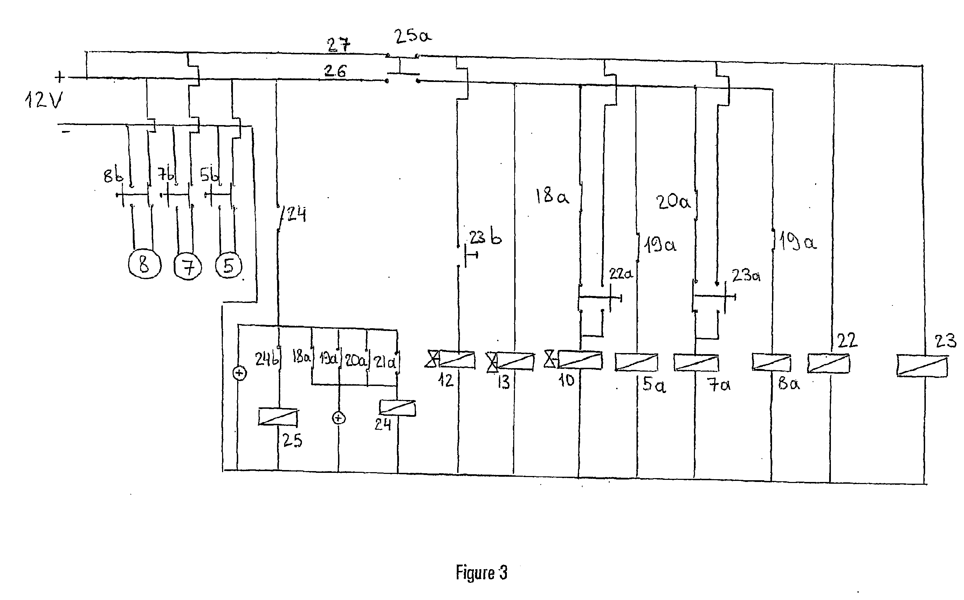

La figure 3 représente le schéma électrique simplifié d'un tel dispositif. La mise du contact (24) ouvre l'électrovanne (13) par l'intermédiaire du relais (25) qui ferme la ligne principale et actionne les pompes (5, 7, 8) grâce au relais (5a, 7a et 8a) qui ferment les contacts (5b, 7b, 8b). Le véhicule est en marche et la climatisation fonctionne.

Lorsque le véhicule est arrêté, le relais (25) ouvre la ligne principale (26) et ferme la ligne auxiliaire (27), ce qui entraîne d'une part la fermeture de l'électrovannes (13) et d'autre part l'arrêt des pompes (5, 8) par l'ouverture des relais (5a, 8a). Au même instant, les temporisateurs (22, 23) sont actionnés simultanément. Le temporisateur (22) ferme le contact (22a) et ouvre l'électrovanne (10) pendant une durée prédéterminée (par exemple 5 secondes). Le temporisateur (23) ferme les contacts (23b, 23a) excitant le relais de commande de l'électrovanne (12) qui ouvre aussitôt ladite électrovanne (12) pendant une autre durée prédéterminée (par exemple 15 secondes) et maintenant en marche la pompe (7) par l'intermédiaire du relais (7a). Durant un temps prédéfini (par exemple 5 secondes) le réfrigérant (eau) circule dans l'électrovanne (10) vers l'absorbeur (4) nettoyant ainsi cette partie du système particulièrement sensible à la cristallisation.

Après ce temps prédéfini, l'électrovanne (10) se ferme définitivement et pendant 10 autres secondes le réfrigérant (eau) circule dans la partie allant de l'électrovanne (10) au bouilleur (1) en passant par l'échangeur (6), libérant cette zone de cette solution à haute concentration en sel évitant ainsi la cristallisation.

En cas d'alarme de niveau ou de pression (18, 19, 20 et 21) les contacts (18a, 19a, 20a ou 21 a) se ferment et le relais (24) actionne le contact (24b) qui ouvre le contact (25a). Simultanément la lampe de l'alarme s'allume.

Les temps indiqués ne sont nullement limitatifs et peuvent varier selon les volumes à traiter.

## Revendications

1. Système de refroidissement à absorption d'un véhicule à moteur utilisant l'eau comme réfrigérant et un absorbant, comprenant un bouilleur (1), un condenseur (2), un évaporateur (3), un absorbeur (4) où la solution résiduelle (l'absorbant) qui provient du bouilleur (1) en passant par un échangeur de chaleur (6) et une première électrovanne (10) est mélangée à nouveau au réfrigérant, une première pompe (5) qui renvoie la solution recomposée de l'absorbeur (4) au bouilleur (1) en passant par l'échangeur de chaleur (6) afin d'effectuer un cycle complet, une deuxième pompe (7) de l'évaporateur qui assure un cycle du réfrigérant dans ledit évaporateur (3), une troisième pompe (8) de l'absorbeur qui assure le cycle de la solution dans ledit absorbeur (4), ainsi qu'une vanne d'expansion (9) positionnée entre le condenseur (2) et l'évaporateur (3), **caractérisé en ce que** ledit système comporte un circuit destiné à assurer l'écoulement du réfrigérant, dès l'arrêt du moteur, de l'évaporateur (3) à l'absorbeur (4) en passant par l'électrovanne (10) d'une part par le maintien en marche de la deuxième pompe (7) de l'évaporateur pour un temps prédéfini, et d'autre part par le maintien de la première électrovanne (10) en position ouverte après l'arrêt du moteur pour un autre temps prédéfini avant sa fermeture, afin de diluer les zones contenant des dépôts résiduels de l'absorbant pour empêcher la cristallisation de ces dits dépôts résiduels.

2. Système de refroidissement à absorption d'un véhicule à moteur selon la revendication 1, **caractérisé en ce que** ledit circuit comporte une deuxième électrovanne (13) qui est en position ouverte lors du fonctionnement du système afin d'assurer le cycle du réfrigérant dans l'évaporateur (3) et une troisième électrovanne (12) agencée entre l'évaporateur (3) et l'absorbeur (4) et qui est fermée lors du fonctionnement du système, lesdites électrovannes (12, 13) s'ouvrant et se fermant respectivement dès l'arrêt du système de manière à assurer l'écoulement du réfrigérant, de l'évaporateur (3) à l'absorbeur (4) en passant par la première électrovanne (10).

3. Système de refroidissement à absorption d'un véhicule à moteur selon la revendication 1 ou 2, **caractérisé en ce que** ladite deuxième pompe (7) de l'évaporateur (3) est agencée de manière à rester encore en marche dès la fermeture de la première électrovanne (10) pour un temps prédéfini afin de permettre au réfrigérant de circuler dans le circuit allant de l'évaporateur (3) au bouilleur (1) en passant par l'échangeur (6), diluant ainsi les zones contenant des dépôts résiduels de l'absorbant et empêchant ainsi la cristallisation de ces dits dépôts résiduels.

4. Système de refroidissement à absorption d'un véhicule à moteur selon la revendication 3, **caractérisé en ce que** le temps prédéfini pour le maintien en marche de la deuxième pompe (7) de l'évaporateur à compter de l'arrêt du moteur est plus long que le temps prédéfini pour le maintien, dès l'arrêt du moteur, en position ouverte de l'électrovanne (10).

5. Système de refroidissement à absorption d'un véhicule à moteur selon la revendication 4, **caractérisé en ce que** le temps prédéfini pour le maintien en marche de la deuxième pompe (7) de l'évaporateur à compter de l'arrêt du moteur est de 2 à 4 fois plus long que le temps prédéfini pour le maintien, dès l'arrêt du moteur, en position ouverte de la première électrovanne (10).

6. Système de refroidissement à absorption d'un véhicule à moteur selon la revendication 4, **caractérisé en ce que** le système utilise comme absorbant du bromure de lithium.

## Claims

1. Motor vehicle absorption cooling system using water as refrigerant and an absorbent, comprising a boiler (1), a condenser (2), an evaporator (3), an absorber (4) where the residual solution (absorbent) which comes from the boiler (1) via a heat exchanger (6) and a first solenoid valve (10) is mixed again with the refrigerant, a first pump (5) which returns the recomposed solution from the absorber (4) to the boiler (1) via the heat exchanger (6) in order to perform a complete cycle, a second pump (7) of the evaporator which ensures a cycling of the refrigerant in said evaporator (3), a third pump (8) of the absorber which ensures the cycling of the solution in said absorber (4), and an expansion valve (9) positioned between the condenser (2) and the evaporator (3), **characterized in that** said system comprises a circuit intended to ensure the flow of the refrigerant, from the moment the motor stops, from the evaporator (3) to the absorber (4) via the solenoid valve (10), on the one hand by keeping the second pump (7) of the evaporator running for a predefined time, and on the other hand by keeping the first solenoid valve (10) in the open position after the motor stops for another predefined time before its closure, in order to dilute the areas containing residual deposits of the absorbent to prevent the crystallization of said residual deposits.

2. Motor vehicle absorption cooling system according to Claim 1, **characterized in that** said circuit comprises a second solenoid valve (13) which is in the open position when the system is operating in order to ensure the cycling of the refrigerant in the evaporator (3) and a third solenoid valve (12) arranged between the evaporator (3) and the absorber (4) and which is closed when the system is operating, said solenoid valves (12, 13) being opened and closed respectively immediately the system stops so as to ensure the flow of the refrigerant, from the evaporator (3) to the absorber (4) via the first solenoid valve (10).

3. Motor vehicle absorption cooling system according to Claim 1 or 2, **characterized in that** said second pump (7) of the evaporator (3) is arranged so as to remain running on closure of the first solenoid valve (10) for a predefined time in order to allow the refrigerant to circulate in the circuit running from the evaporator (3) to the boiler (1) via the exchanger (6), thus diluting the areas containing residual deposits of the absorbent and thus preventing the crystallization of said residual deposits.

4. Motor vehicle absorption cooling system according to Claim 3, **characterized in that** the predefined time for keeping the second pump (7) of the evaporator running from the time the motor stops is longer than the predefined time for keeping the solenoid valve (10) in the open position immediately the motor stops.

5. Motor vehicle absorption cooling system according to Claim 4, **characterized in that** the predefined time for keeping the second pump (7) of the evaporator running from the time the motor stops is two to four times longer than the predefined time for keeping the first solenoid valve (10) in the open position immediately the motor stops.

6. Motor vehicle absorption cooling system according to Claim 4, **characterized in that** the system uses lithium bromide as the absorbent.

## Patentansprüche

1. Kühlsystem mit Absorption für ein Kraftfahrzeug, das Wasser als Kühlmittel und einen Absorber verwendet, umfassend Siedekessel (1), einen Kondensator (2), einen Verdampfer (3), einen Absorber (4), in dem die Restlösung (das Absorbens), die vom Siedekessel (1) kommt, wobei sie durch einen Wärmetauscher (6) und ein erstes Magnetventil (10) strömt, wieder mit dem Kühlmittel gemischt wird, eine erste Pumpe (5), die die wieder gebildete Lösung vom Absorber (4) zum Siedekessel (1) schickt, wobei sie durch den Wärmetauscher (6) strömt, um einen vollständigen Zyklus zu durchlaufen, eine zweite Pumpe (7) des Verdampfers, die einen Kühlzyklus in dem Verdampfer (3) sicherstellt, eine dritte Pumpe (8) des Absorbers, die den Zyklus der Lösung im Absorber (4) sicherstellt, sowie ein Expansionsventil (9), das zwischen dem Kondensator (2) und dem Verdampfer (3) angeordnet ist, **dadurch gekennzeichnet, dass** das System eine Schaltung umfasst, die dazu bestimmt ist, das Abfließen des Kühlmittels vom Start des Motors weg vom Verdampfer (3) zum Absorber (4) unter Strömen durch das Magnetventil (10) einerseits durch die Aufrechterhaltung des Betriebs der zweiten Pumpe (7) des Verdampfers für eine vordefinierte Zeit und andererseits durch das Halten des ersten Magnetventils (10) in offener Position nach dem Ausschalten des Motors für eine weitere vordefinierte Zeit vor seinem Verschluss sicherzustellen, um die Zonen, die Restablagerungen des Absorbens enthalten, zu verdünnen, um die Kristallisierung dieser Restablagerungen zu verhindern.

2. Kühlsystem mit Absorption für ein Kraftfahrzeug nach Anspruch 1, **dadurch gekennzeichnet, dass** die Schaltung ein zweites Magnetventil (13), das während des Betriebs des Systems in offener Position ist, um den Zyklus des Kühlmittels im Verdampfer (3) zu sichern, und ein drittes Magnetventil (12) umfasst, das zwischen dem Verdampfer (3) und dem Absorber (4) angeordnet und während des Betriebs des Systems geschlossen ist, wobei sich die Magnetventile (12, 13) beim Abschalten des Systems öffnen und schließen, um das Abfließen des Kühlmittels vom Verdampfer (3) zum Absorber (4) zu sichern, wobei es durch das erste Magnetventil (10) strömt.

3. Kühlsystem mit Absorption für ein Kraftfahrzeug nach Anspruch 1 oder 2, **dadurch gekennzeichnet, dass** die zweite Pumpe (7) des Verdampfers (3) derart angeordnet ist, dass sie beim Schließen des ersten Magnetventils (10) für eine vordefinierte Zeit noch in Betrieb bleibt, um es dem Kühlmittel zu ermöglichen, in der Schaltung, die vom Verdampfer (3) zum Siedekessel (1) geht, zu zirkulieren, wobei es durch den Wärmetauscher (6) strömt und wobei es die Zonen, die Restablagerungen des Absorbens enthalten, verdünnt und so die Kristallisierung dieser Restablagerungen verhindert.

4. Kühlsystem mit Absorption für ein Kraftfahrzeug nach Anspruch 3, **dadurch gekennzeichnet, dass** die vordefinierte Zeit, um die zweite Pumpe (7) des Verdampfers ab dem Abschalten des Motors in Betrieb zu halten, länger ist als die vordefinierte Zeit, um bei Abschalten des Motors das Magnetventil (10) in offener Position zu halten.

5. Kühlsystem mit Absorption für ein Kraftfahrzeug nach Anspruch 4, **dadurch gekennzeichnet, dass** die vordefinierte Zeit, um die zweite Pumpe (7) des Verdampfers ab dem Abschalten des Motors in Betrieb zu halten, 2- bis 4-mal länger als die vordefinierte Zeit ist, um bei Abschalten des Motors das erste Magnetventil (10) in offener Position zu halten.

6. Kühlsystem mit Absorption für ein Kraftfahrzeug nach Anspruch 4, **dadurch gekennzeichnet, dass** das System als Absorbens Lithiumbromid verwendet.
